# EUROPEAN PATENT APPLICATION

(11) **EP 4 749 900 A1**
(43) Date of publication of application: **27.05.2026**
(21) Application number: 25215429.9
(22) Date of filing: 13.11.2025
(51) Int. Cl.: H02M 1/08, H02M 1/32, H02M 3/158

(54) **POWER CONVERTER, ENERGY STORAGE CABINET, AND CONTROL METHOD OF POWER CONVERSION CIRCUIT**

(30) Priority: 19.11.2024 CN 202411667688
(71) Applicant: Huawei Digital Power Technologies Co., Ltd., Shenzhen, Guangdong 518043 (CN)
(72) Inventor: DING, Jian, Shenzhen, 518043 (CN); GUO, Haibin, Shenzhen, 518043 (CN); MENG, Yuandong, Shenzhen, 518043 (CN); WU, Yihong, Shenzhen, 518043 (CN)
(74) Representative: Isarpatent

(57) **Abstract**

This application provides a power converter, an energy storage cabinet, and a control method of a power conversion circuit, and relates to the field of energy technologies. The power converter includes a power controller and the power conversion circuit. The power conversion circuit includes a first power transistor. The power controller is configured to: when the first power transistor is in an on state, receive an instruction of stopping sending a PWM driver gating signal, where the instruction of stopping sending a PWM driver gating signal instructs to perform control over stopping sending a PWM driver gating signal on the first power transistor; and when a specified condition is met, perform, according to the instruction of stopping sending a PWM driver gating signal, control over stopping sending a PWM driver gating signal on the first power transistor, where the specified condition is that a drive signal of the first power transistor is a turn-off signal. According to this application, a possibility that a safety problem occurs in the power conversion circuit can be reduced.

## Description

### TECHNICAL FIELD

This application relates to the field of energy technologies, and in particular, to a power converter, an energy storage cabinet, and a control method of a power conversion circuit.

### BACKGROUND

With development of society, demands for electric energy are continuously increasing across various industries. The electric energy may be provided by a power supply system. The power supply system may include a power supply, a power controller, and a power conversion circuit. The power supply may be a battery, a power grid, or the like. An input and an output of the power conversion circuit are respectively connected to the power supply and a power-consuming device. The power controller is configured to control on and off of a power transistor in the power conversion circuit, so that the power conversion circuit performs power conversion on an input power.

The power controller has two types of control over the power transistor: control over sending a PWM driver gating signal and control over stopping sending a PWM driver gating signal. When performing control over sending a PWM driver gating signal, the power controller outputs, to the power transistor, a drive signal that can control the power transistor to be periodically turned on and off. When performing control over stopping sending a PWM driver gating signal, the power controller outputs, to the power transistor, a drive signal that can control the power transistor to keep turned-off.

In a related technology, both control over stopping sending a PWM driver gating signal and control over sending a PWM driver gating signal are immediately performed after corresponding instructions are received. This may cause a safety problem to occur in the power conversion circuit.

### SUMMARY

This application provides a power converter, an energy storage cabinet, and a control method of a power conversion circuit, to reduce a possibility that a safety problem occurs in the power conversion circuit. Related technical solutions are as follows.

According to a first aspect, a power converter is provided. The power converter includes a power controller and a power conversion circuit. The power conversion circuit includes a first power transistor. The power controller is configured to: when the first power transistor is in an on state, receive an instruction of stopping sending a PWM driver gating signal, where the instruction of stopping sending a PWM driver gating signal instructs to perform control over stopping sending a PWM driver gating signal on the first power transistor; and when a specified condition is met, perform, according to the instruction of stopping sending a PWM driver gating signal, control over stopping sending a PWM driver gating signal on the first power transistor, where the specified condition is that a drive signal of the first power transistor is a turn-off signal.

In the technical solutions provided in this application, after the instruction of stopping sending a PWM driver gating signal for the power transistor is received, and when it is determined that the power transistor is turned off, control over stopping sending a PWM driver gating signal is performed on the power transistor. This can effectively avoid a voltage peak or a current peak that is generated due to a sudden current change or a sudden voltage change when sending a PWM driver gating signal is stopped for the power transistor, which improves stability and safety of the power conversion circuit.

In a possible implementation, the power controller is further configured to obtain indication information of a policy of stopping sending a PWM driver gating signal. Correspondingly, processing after the instruction of stopping sending a PWM driver gating signal is received may be as follows:

When the indication information of the policy of stopping sending a PWM driver gating signal is first indication information, and when the specified condition is met, control over stopping sending a PWM driver gating signal is performed on the first power transistor according to the instruction of stopping sending a PWM driver gating signal.

In the technical solutions provided in this application, related personnel may configure a policy of stopping sending a PWM driver gating signal based on an actual service requirement and a topology of the power conversion circuit. After the instruction of stopping sending a PWM driver gating signal is received, the indication information of the policy of stopping sending a PWM driver gating signal may be first obtained, to determine a policy that is of stopping sending a PWM driver gating signal and that is used for current control over stopping sending a PWM driver gating signal. When the indication information of the policy of stopping sending a PWM driver gating signal is the first indication information, and when the specified condition is met, control over stopping sending a PWM driver gating signal is performed on the first power transistor according to the instruction of stopping sending a PWM driver gating signal. The first indication information is, for example, 1.

In a possible implementation, the power controller is further configured to: when the indication information of the policy of stopping sending a PWM driver gating signal is second indication information, and when the instruction of stopping sending a PWM driver gating signal is received, perform, according to the instruction of stopping sending a PWM driver gating signal, control over stopping sending a PWM driver gating signal on the first power transistor, where the first indication information is different from the second indication information.

In the technical solutions provided in this application, the related personnel may configure the policy of stopping sending a PWM driver gating signal based on the actual service requirement and the topology of the power conversion circuit. After the instruction of stopping sending a PWM driver gating signal is received, the indication information of the policy of stopping sending a PWM driver gating signal may be first obtained, to determine the policy that is of stopping sending a PWM driver gating signal and that is used for the current control over stopping sending a PWM driver gating signal. When the indication information of the policy of stopping sending a PWM driver gating signal is the second indication information, and when the instruction of stopping sending a PWM driver gating signal is received, control over stopping sending a PWM driver gating signal is performed on the first power transistor according to the instruction of stopping sending a PWM driver gating signal. The first indication information is different from the second indication information, and the second indication information is, for example, 0.

In a possible implementation, the power controller is further configured to: obtain the indication information of the policy of stopping sending a PWM driver gating signal; and store the indication information of the policy of stopping sending a PWM driver gating signal.

In the technical solutions provided in this application, the related personnel may configure the policy of stopping sending a PWM driver gating signal based on the actual service requirement and the topology of the power conversion circuit. The power controller stores the indication information of the policy of stopping sending a PWM driver gating signal configured by a user, to facilitate determining the policy of stopping sending a PWM driver gating signal after the instruction of stopping sending a PWM driver gating signal is subsequently received.

In a possible implementation, the power controller is further configured to obtain control object indication information, where the control object indication information indicates a power transistor group that corresponds to the indication information of the policy of stopping sending a PWM driver gating signal, and the power transistor group includes the first power transistor.

In the technical solutions provided in this application, some power conversion circuits have a large quantity of power transistors, and circuit topologies are complex. In this case, group control may be performed on these power transistors, and the policy of stopping sending a PWM driver gating signal is separately configured for each power transistor group. In this way, the power conversion circuit can be controlled more accurately and in a more diversified manner, so that the power conversion circuit can have better performance.

In a possible implementation, the power controller is configured to: when a trigger event of the instruction of stopping sending a PWM driver gating signal is a non-safety protection event, and when the specified condition is met, perform, according to the instruction of stopping sending a PWM driver gating signal, control over stopping sending a PWM driver gating signal on the first power transistor, where the non-safety protection event is an event that cannot cause the power conversion circuit to generate a safety accident.

In the technical solutions provided in this application, a to-be-used policy of stopping sending a PWM driver gating signal can be determined based on the trigger event of the instruction of stopping sending a PWM driver gating signal. Specifically, when the trigger event of the instruction of stopping sending a PWM driver gating signal is the non-safety protection event, and when the specified condition is met, control over stopping sending a PWM driver gating signal can be performed on the first power transistor according to the instruction of stopping sending a PWM driver gating signal. Because the non-safety protection event cannot cause the power conversion circuit to generate the safety accident, when the trigger event is the non-safety protection event, control over stopping sending a PWM driver gating signal may be performed when the specified condition is met. This can avoid the current peak/voltage peak of the power transistor, and can avoid a safety problem that occurs in the power conversion circuit due to delay of control over stopping sending a PWM driver gating signal.

In a possible implementation, the power controller is further configured to: when the trigger event of the instruction of stopping sending a PWM driver gating signal is a safety protection event, and when the instruction of stopping sending a PWM driver gating signal is received, perform, according to the instruction of stopping sending a PWM driver gating signal, control over stopping sending a PWM driver gating signal on the first power transistor, where the safety protection event is an event that can cause the power conversion circuit to generate the safety accident.

In the technical solutions provided in this application, the to-be-used policy of stopping sending a PWM driver gating signal can be determined based on the trigger event of the instruction of stopping sending a PWM driver gating signal. Specifically, when the trigger event of the instruction of stopping sending a PWM driver gating signal is the safety protection event, and when the instruction of stopping sending a PWM driver gating signal is received, control over stopping sending a PWM driver gating signal is performed on the first power transistor according to the instruction of stopping sending a PWM driver gating signal. Because the safety protection event can cause the safety accident in the power conversion circuit, after the instruction of stopping sending a PWM driver gating signal is received, control over stopping sending a PWM driver gating signal needs to be immediately performed, to ensure circuit safety of the power conversion circuit.

In a possible implementation, the power controller is configured to: after a first on/off cycle ends, and when the specified condition is met, perform, according to the instruction of stopping sending a PWM driver gating signal, control over stopping sending a PWM driver gating signal on the first power transistor, where the first on/off cycle is an on/off cycle in which the first power transistor is located when the instruction of stopping sending a PWM driver gating signal is received.

In the technical solutions provided in this application, when the on/off cycle in which the power transistor is currently located ends, the power transistor is in an off state. Therefore, after the on/off cycle in which the power transistor is currently located ends, if it is determined that the specified condition is met, control over stopping sending a PWM driver gating signal may be performed on the first power transistor. This can effectively avoid the current peak or the voltage peak that is generated because the power transistor is suddenly turned off when the power transistor is turned on, which improves stability and safety of the power conversion circuit.

In a possible implementation, the power controller is further configured to: receive an instruction of sending a PWM driver gating signal in a second on/off cycle in which the first power transistor is located, where the instruction of sending a PWM driver gating signal instructs to perform control over sending a PWM driver gating signal on the first power transistor; and after the second on/off cycle ends, perform, according to the instruction of sending a PWM driver gating signal, control over sending a PWM driver gating signal on the first power transistor.

In the technical solutions provided in this application, after the instruction of sending a PWM driver gating signal for the power transistor is received, control over sending a PWM driver gating signal may be performed when a current on/off cycle ends (that is, a next on/off cycle starts). This can effectively avoid an overcurrent phenomenon caused by stopping sending a PWM driver gating signal performed in the on/off cycle of the power transistor.

In a possible implementation, the power conversion circuit includes a plurality of power transistors. The plurality of power transistors include the first power transistor, and the instruction of stopping sending a PWM driver gating signal instructs to perform control over stopping sending a PWM driver gating signal on the plurality of power transistors. Correspondingly, control over stopping sending a PWM driver gating signal may be as follows:

When the specified condition is met, control over stopping sending a PWM driver gating signal is performed on the plurality of power transistors according to the instruction of stopping sending a PWM driver gating signal, where the specified condition is that drive signals of the plurality of power transistors are all turn-off signals.

In the technical solutions provided in this application, the instruction of stopping sending a PWM driver gating signal may instruct to perform control over stopping sending a PWM driver gating signal on all power transistors in the power conversion circuit. In this case, control over stopping sending a PWM driver gating signal may be performed when the plurality of power transistors are all turned off. This can effectively avoid current peaks or voltage peaks that are generated because the power transistors are suddenly turned off when the power transistors are turned on, which improves stability and safety of the power conversion circuit.

According to a second aspect, a power converter is provided. The power converter includes a power controller and a power conversion circuit. The power conversion circuit includes a first power transistor. The power control module is configured to: receive an instruction of sending a PWM driver gating signal in an on/off cycle in which the first power transistor is located, where the instruction of sending a PWM driver gating signal instructs to perform control over sending a PWM driver gating signal on the first power transistor; and after the on/off cycle ends, perform, according to the instruction of sending a PWM driver gating signal, control over sending a PWM driver gating signal on the first power transistor.

In the technical solutions provided in this application, after the instruction of sending a PWM driver gating signal for the power transistor is received, control over sending a PWM driver gating signal may be performed when a current on/off cycle ends (that is, a next on/off cycle starts). This can effectively avoid an overcurrent phenomenon caused by stopping sending a PWM driver gating signal performed in the on/off cycle of the power transistor.

In a possible implementation, the power control module is further configured to obtain indication information of a policy of sending a PWM driver gating signal. Correspondingly, processing after the instruction of sending a PWM driver gating signal is received may be as follows:

When the indication information of the policy of sending a PWM driver gating signal is first indication information, and when the on/off cycle ends, control over sending a PWM driver gating signal is performed on the first power transistor according to the instruction of sending a PWM driver gating signal.

In the technical solutions provided in this application, related personnel may configure a policy of sending a PWM driver gating signal based on an actual service requirement and a topology of the power conversion circuit. After the instruction of sending a PWM driver gating signal is received, the indication information of the policy of sending a PWM driver gating signal may be first obtained, to determine a policy that is of sending a PWM driver gating signal and that is used for current control over sending a PWM driver gating signal. When the indication information of the policy of sending a PWM driver gating signal is the first indication information, and when a specified condition is met, control over sending a PWM driver gating signal is performed on the first power transistor according to the instruction of sending a PWM driver gating signal. The first indication information is, for example, 1.

In a possible implementation, the power control module is further configured to: when the indication information of the policy of sending a PWM driver gating signal is second indication information, and when the instruction of sending a PWM driver gating signal is received, perform, according to the instruction of sending a PWM driver gating signal, control over sending a PWM driver gating signal on the first power transistor, where the first indication information is different from the second indication information.

In the technical solutions provided in this application, the related personnel may configure the policy of sending a PWM driver gating signal based on the actual service requirement and the topology of the power conversion circuit. After the instruction of sending a PWM driver gating signal is received, the indication information of the policy of sending a PWM driver gating signal may be first obtained, to determine the policy that is of sending a PWM driver gating signal and that is used for current control over sending a PWM driver gating signal. When the indication information of the policy of sending a PWM driver gating signal is the second indication information, and when the instruction of sending a PWM driver gating signal is received, control over sending a PWM driver gating signal is performed on the first power transistor according to the instruction of sending a PWM driver gating signal. The first indication information is different from the second indication information, and the second indication information is, for example, 0.

In a possible implementation, the power control module is further configured to: obtain indication information of a policy of sending a PWM driver gating signal; and store the indication information of the policy of sending a PWM driver gating signal.

In the technical solutions provided in this application, the related personnel may configure the policy of sending a PWM driver gating signal based on the actual service requirement and the topology of the power conversion circuit. The power controller stores the indication information of the policy of sending a PWM driver gating signal configured by a user, to facilitate determining the policy of sending a PWM driver gating signal after the instruction of sending a PWM driver gating signal is subsequently received.

In a possible implementation, the power control module is further configured to: obtain indication information that is of a policy of sending a PWM driver gating signal and that corresponds to control object indication information, where the control object indication information indicates a power transistor group that corresponds to the indication information of the policy of sending a PWM driver gating signal, and the power transistor group includes the first power transistor.

In the technical solutions provided in this application, some power conversion circuits have a large quantity of power transistors, and circuit topologies are complex. In this case, group control may be performed on these power transistors, and the policy of sending a PWM driver gating signal is separately configured for each power transistor group. In this way, the power conversion circuit can be controlled more accurately and in a more diversified manner, so that the power conversion circuit can have better performance.

In a possible implementation, the power control module is further configured to: when the first power transistor is in an on state, receive an instruction of stopping sending a PWM driver gating signal, where the instruction of stopping sending a PWM driver gating signal instructs to perform control over stopping sending a PWM driver gating signal on the first power transistor; and when the specified condition is met, perform, according to the instruction of stopping sending a PWM driver gating signal, control over stopping sending a PWM driver gating signal on the first power transistor, where the specified condition is that a drive signal of the first power transistor is a turn-off signal.

In the technical solutions provided in this application, after the instruction of stopping sending a PWM driver gating signal for the power transistor is received, and when the power transistor is turned off, control over stopping sending a PWM driver gating signal is performed on the power transistor. This can effectively avoid a current peak or a voltage peak that is generated because the power transistor is suddenly turned off when the power transistor is turned on, which improves stability and safety of the power conversion circuit.

In a possible implementation, the power conversion circuit includes a plurality of power transistors. On/off cycles of the plurality of power transistors are the same. The plurality of power transistors include the first power transistor, and the instruction of sending a PWM driver gating signal instructs to perform control over sending a PWM driver gating signal on the plurality of power transistors. Correspondingly, control over sending a PWM driver gating signal may be as follows:

When the on/off cycle ends, control over sending a PWM driver gating signal is performed on the plurality of power transistors according to the instruction of sending a PWM driver gating signal.

In the technical solutions provided in this application, the instruction of sending a PWM driver gating signal may instruct to perform control over sending a PWM driver gating signal on all power transistors in the power conversion circuit, and the on/off cycles of the plurality of power transistors are the same. In this case, control over sending a PWM driver gating signal may be performed when the current on/off cycle ends (that is, the next on/off cycle starts). This can effectively avoid the overcurrent phenomenon caused by stopping sending a PWM driver gating signal performed in the on/off cycle of the power transistor.

According to a third aspect, a control method of a power conversion circuit is provided. The power conversion circuit includes a first power transistor. The method includes:
when the first power transistor is in an on state, receiving an instruction of stopping sending a PWM driver gating signal, where the instruction of stopping sending a PWM driver gating signal instructs to perform control over stopping sending a PWM driver gating signal on the first power transistor; and
when a specified condition is met, performing, according to the instruction of stopping sending a PWM driver gating signal, control over stopping sending a PWM driver gating signal on the first power transistor, where the specified condition is that a drive signal of the first power transistor is a turn-off signal.

In a possible implementation, the method further includes:
obtaining indication information of a policy of stopping sending a PWM driver gating signal; and
when the specified condition is met, performing, according to the instruction of stopping sending a PWM driver gating signal, control over stopping sending a PWM driver gating signal on the first power transistor includes:
   when the indication information of the policy of stopping sending a PWM driver gating signal is first indication information, and when the specified condition is met, performing, according to the instruction of stopping sending a PWM driver gating signal, control over stopping sending a PWM driver gating signal on the first power transistor.

In a possible implementation, the method further includes:
when the indication information of the policy of stopping sending a PWM driver gating signal is second indication information, and when the instruction of stopping sending a PWM driver gating signal is received, performing, according to the instruction of stopping sending a PWM driver gating signal, control over stopping sending a PWM driver gating signal on the first power transistor, where the first indication information is different from the second indication information.

In a possible implementation, the method further includes:
obtaining the indication information of the policy of stopping sending a PWM driver gating signal; and
storing the indication information of the policy of stopping sending a PWM driver gating signal.

In a possible implementation, the method further includes:
obtaining control object indication information, where the control object indication information indicates a power transistor group that corresponds to the indication information of the policy of stopping sending a PWM driver gating signal, and the power transistor group includes the first power transistor.

In a possible implementation, when the specified condition is met, performing, according to the instruction of stopping sending a PWM driver gating signal, control over stopping sending a PWM driver gating signal on the first power transistor includes:
when a trigger event of the instruction of stopping sending a PWM driver gating signal is a non-safety protection event, and when the specified condition is met, performing, according to the instruction of stopping sending a PWM driver gating signal, control over stopping sending a PWM driver gating signal on the first power transistor, where the non-safety protection event is an event that cannot cause the power conversion circuit to generate a safety accident.

In a possible implementation, the method further includes:
when the trigger event of the instruction of stopping sending a PWM driver gating signal is a safety protection event, and when the instruction of stopping sending a PWM driver gating signal is received, performing, according to the instruction of stopping sending a PWM driver gating signal, control over stopping sending a PWM driver gating signal on the first power transistor, where the safety protection event is an event that can cause the power conversion circuit to generate the safety accident.

In a possible implementation, when the specified condition is met, performing, according to the instruction of stopping sending a PWM driver gating signal, control over stopping sending a PWM driver gating signal on the first power transistor includes:
after a first on/off cycle ends, and when the specified condition is met, performing, according to the instruction of stopping sending a PWM driver gating signal, control over stopping sending a PWM driver gating signal on the first power transistor, where the first on/off cycle is an on/off cycle in which the first power transistor is located when the instruction of stopping sending a PWM driver gating signal is received.

In a possible implementation, the method further includes:
receiving an instruction of sending a PWM driver gating signal in a second on/off cycle in which the first power transistor is located, where the instruction of sending a PWM driver gating signal instructs to perform control over sending a PWM driver gating signal on the first power transistor; and
after the second on/off cycle ends, performing, according to the instruction of sending a PWM driver gating signal, control over sending a PWM driver gating signal on the first power transistor.

In a possible implementation, the power conversion circuit includes a plurality of power transistors. The plurality of power transistors include the first power transistor, and the instruction of stopping sending a PWM driver gating signal instructs to perform control over stopping sending a PWM driver gating signal on the plurality of power transistors.

When the specified condition is met, performing, according to the instruction of stopping sending a PWM driver gating signal, control over stopping sending a PWM driver gating signal on the first power transistor includes:
when the specified condition is met, performing, according to the instruction of stopping sending a PWM driver gating signal, control over stopping sending a PWM driver gating signal on the plurality of power transistors, where the specified condition is that drive signals of the plurality of power transistors are all turn-off signals.

According to a fourth aspect, a control method of a power conversion circuit is provided. The power conversion circuit includes a first power transistor. The method includes:
receiving an instruction of sending a PWM driver gating signal in an on/off cycle in which the first power transistor is located, where the instruction of sending a PWM driver gating signal instructs to perform control over sending a PWM driver gating signal on the first power transistor; and
when the on/off cycle ends, performing, according to the instruction of sending a PWM driver gating signal, control over sending a PWM driver gating signal on the first power transistor.

In a possible implementation, the method further includes:
obtaining indication information of a policy of sending a PWM driver gating signal; and
when the on/off cycle ends, performing, according to the instruction of sending a PWM driver gating signal, control over sending a PWM driver gating signal on the first power transistor includes:
   when the indication information of the policy of sending a PWM driver gating signal is first indication information, and when the on/off cycle ends, performing, according to the instruction of sending a PWM driver gating signal, control over sending a PWM driver gating signal on the first power transistor.

In a possible implementation, the method further includes:
when the indication information of the policy of sending a PWM driver gating signal is second indication information, and when the instruction of sending a PWM driver gating signal is received, performing, according to the instruction of sending a PWM driver gating signal, control over sending a PWM driver gating signal on the first power transistor, where the first indication information is different from the second indication information.

In a possible implementation, the method further includes:
obtaining the indication information of the policy of sending a PWM driver gating signal; and
storing the indication information of the policy of sending a PWM driver gating signal.

In a possible implementation, the method further includes:
obtaining indication information that is of a policy of sending a PWM driver gating signal and that corresponds to control object indication information, where the control object indication information indicates a power transistor group that corresponds to the indication information of the policy of sending a PWM driver gating signal, and the power transistor group includes the first power transistor.

In a possible implementation, the method further includes:
when the first power transistor is in an on state, receiving an instruction of stopping sending a PWM driver gating signal, where the instruction of stopping sending a PWM driver gating signal instructs to perform control over stopping sending a PWM driver gating signal on the first power transistor; and
when a specified condition is met, performing, according to the instruction of stopping sending a PWM driver gating signal, control over stopping sending a PWM driver gating signal on the first power transistor, where the specified condition is that a drive signal of the first power transistor is a turn-off signal.

In a possible implementation, the power conversion circuit includes a plurality of power transistors. On/off cycles of the plurality of power transistors are the same. The plurality of power transistors include the first power transistor, and the instruction of sending a PWM driver gating signal instructs to perform control over sending a PWM driver gating signal on the plurality of power transistors.

When the on/off cycle ends, performing, according to the instruction of sending a PWM driver gating signal, control over sending a PWM driver gating signal on the first power transistor includes:
when the on/off cycle ends, performing, according to the instruction of sending a PWM driver gating signal, control over sending a PWM driver gating signal on the plurality of power transistors.

According to a fifth aspect, a control method of a power conversion circuit is provided. The power conversion circuit includes a first power transistor. The method includes:
when the first power transistor is in an on state, receiving an instruction of stopping sending a PWM driver gating signal, where the instruction of stopping sending a PWM driver gating signal instructs to perform control over stopping sending a PWM driver gating signal on the first power transistor;
obtaining indication information of a policy of stopping sending a PWM driver gating signal; and
when the indication information of the policy of stopping sending a PWM driver gating signal is first indication information, and when a specified condition is met, performing, according to the instruction of stopping sending a PWM driver gating signal, control over stopping sending a PWM driver gating signal on the first power transistor, where the specified condition is that a drive signal of the first power transistor is a turn-off signal.

In a possible implementation, the method further includes:
when the indication information of the policy of stopping sending a PWM driver gating signal is second indication information, and when the instruction of stopping sending a PWM driver gating signal is received, performing, according to the instruction of stopping sending a PWM driver gating signal, control over stopping sending a PWM driver gating signal on the first power transistor, where the first indication information is different from the second indication information.

In a possible implementation, the method further includes:
obtaining the indication information of the policy of stopping sending a PWM driver gating signal; and
storing the indication information of the policy of stopping sending a PWM driver gating signal.

In a possible implementation, the method further includes:
obtaining control object indication information, where the control object indication information indicates a power transistor group that corresponds to the indication information of the policy of stopping sending a PWM driver gating signal, and the power transistor group includes the first power transistor.

According to a sixth aspect, a control method of a power conversion circuit is provided. The power conversion circuit includes a first power transistor. The method includes:
when the first power transistor is in an on state, receiving an instruction of stopping sending a PWM driver gating signal, where the instruction of stopping sending a PWM driver gating signal instructs to perform control over stopping sending a PWM driver gating signal on the first power transistor; and
when a trigger event of the instruction of stopping sending a PWM driver gating signal is a non-safety protection event, and when a specified condition is met, performing, according to the instruction of stopping sending a PWM driver gating signal, control over stopping sending a PWM driver gating signal on the first power transistor, where the non-safety protection event is an event that cannot cause the power conversion circuit to generate a safety accident.

In a possible implementation, the method further includes:
when the trigger event of the instruction of stopping sending a PWM driver gating signal is a safety protection event, and when the instruction of stopping sending a PWM driver gating signal is received, performing, according to the instruction of stopping sending a PWM driver gating signal, control over stopping sending a PWM driver gating signal on the first power transistor, where the safety protection event is an event that can cause the power conversion circuit to generate the safety accident.

According to a seventh aspect, a control method of a power conversion circuit is provided. The power conversion circuit includes a first power transistor. The method includes:
receiving an instruction of sending a PWM driver gating signal in an on/off cycle in which the first power transistor is located, where the instruction of sending a PWM driver gating signal instructs to perform control over sending a PWM driver gating signal on the first power transistor;
obtaining indication information of a policy of sending a PWM driver gating signal; and
when the indication information of the policy of sending a PWM driver gating signal is first indication information, and when the on/off cycle ends, performing, according to the instruction of sending a PWM driver gating signal, control over sending a PWM driver gating signal on the first power transistor.

In a possible implementation, the method further includes:
when the indication information of the policy of sending a PWM driver gating signal is second indication information, and when the instruction of sending a PWM driver gating signal is received, performing, according to the instruction of sending a PWM driver gating signal, control over sending a PWM driver gating signal on the first power transistor, where the first indication information is different from the second indication information.

In a possible implementation, the method further includes:
obtaining the indication information of the policy of sending a PWM driver gating signal; and
storing the indication information of the policy of sending a PWM driver gating signal.

In a possible implementation, the method further includes:
obtaining indication information that is of a policy of sending a PWM driver gating signal and that corresponds to control object indication information, where the control object indication information indicates a power transistor group that corresponds to the indication information of the policy of sending a PWM driver gating signal, and the power transistor group includes the first power transistor.

According to an eighth aspect, a control apparatus of a power conversion circuit is provided. The apparatus includes at least one module. The at least one module is configured to implement the methods provided in the third aspect, the fourth aspect, the fifth aspect, the sixth aspect, the seventh aspect, and the possible implementations thereof.

According to a ninth aspect, an energy storage cabinet is provided. The energy storage cabinet includes a battery and the power converter provided in the first aspect, the second aspect, and the possible implementations thereof. The power converter is configured to perform power conversion on the battery.

According to a tenth aspect, a charging pile is provided. The charging pile includes the power converter according to the first aspect, the second aspect, and the possible implementations thereof. The power converter is configured to perform power conversion on the power grid.

According to an eleventh aspect, a computer-readable storage medium is provided. The computer-readable storage medium includes computer program instructions. When the computer program instructions are executed by a power converter, the power converter performs the methods provided in the third aspect, the fourth aspect, the fifth aspect, the sixth aspect, the seventh aspect, and the possible implementations thereof.

According to a twelfth aspect, a computer program product including instructions is provided. When the instructions are run by a power converter, the power converter is enabled to perform the methods provided in the third aspect, the fourth aspect, the fifth aspect, the sixth aspect, the seventh aspect, and the possible implementations thereof.

### BRIEF DESCRIPTION OF DRAWINGS

FIG. 1 is a diagram of a carrier according to an embodiment of this application;
FIG. 2 is a diagram of a structure of a power supply system according to an embodiment of this application;
FIG. 3 is a schematic of a power conversion circuit according to an embodiment of this application;
FIG. 4 is a control diagram of a power conversion circuit according to an embodiment of this application;
FIG. 5 is a control diagram of a power conversion circuit according to an embodiment of this application;
FIG. 6 is a diagram of a waveform of an inductor current according to an embodiment of this application;
FIG. 7 is a flowchart of a control method of a power conversion circuit according to an embodiment of this application;
FIG. 8 is a control diagram of a power conversion circuit according to an embodiment of this application;
FIG. 9 is a flowchart of a control method of a power conversion circuit according to an embodiment of this application;
FIG. 10 is a flowchart of a control method of a power conversion circuit according to an embodiment of this application;
FIG. 11 is a flowchart of a control method of a power conversion circuit according to an embodiment of this application;
FIG. 12 is a flowchart of a control method of a power conversion circuit according to an embodiment of this application;
FIG. 13 is a control diagram of a power conversion circuit according to an embodiment of this application;
FIG. 14 is a flowchart of a control method of a power conversion circuit according to an embodiment of this application;
FIG. 15 is a diagram of a structure of a power converter according to an embodiment of this application; and
FIG. 16 is a diagram of a structure of an energy storage cabinet according to an embodiment of this application.

### DESCRIPTION OF EMBODIMENTS

To make the objectives, technical solutions, and advantages of this application clearer, the following further describes the implementations of this application in detail with reference to the accompanying drawings.

The following first explains concepts in this application.

### Power transistor

The power transistor is a semiconductor device that can withstand a high power. The power transistor is mainly configured to control and adjust a current and a voltage. The power transistor may be turned on and off based on a drive signal applied to the power transistor. The power transistor may include a metal-oxide semiconductor field-effect transistor (metal-oxide semiconductor field-effect transistor, MOSFET), an insulated gate bipolar transistor (insulated gate bipolar transistor, IGBT), and the like.

### Control over sending a PWM driver gating signal

A power controller outputs, to a power transistor, a drive signal that can control the power transistor to be periodically turned on and off. For example, the drive signal is periodically switched between a high level and a low level. When the drive signal is at the high level, the power transistor controlled by the power controller is turned on. When the drive signal is at the low level, the power transistor controlled by the power controller is turned off.

### Control over stopping sending a PWM driver gating signal

A power controller outputs, to a power transistor, a drive signal that can control the power transistor to be continuously turned off. For example, the drive signal is continuously in a low level, and the power transistor controlled by the power controller keeps in an off state.

### Drive signal

The drive signal is generated by modulating a carrier. There are a plurality of modulation methods. The following uses one of the modulation methods as an example for description.

A modulation reference voltage range, for example, (V1, V2), may be configured for each power transistor. When control over sending a PWM driver gating signal is performed on a power transistor, the carrier and the modulation reference voltage range are input to a comparator. When a voltage of the carrier is greater than V1 and less than V2, the comparator outputs a high level (drive signal). When the voltage of the carrier is less than/equal to V1 or greater than/equal to V2, the comparator outputs a low level (drive signal). When control over stopping sending a PWM driver gating signal is performed on the power transistor, two endpoint values of the modulation reference voltage range are changed to a same value, for example, (V1, V1). The comparator outputs the high level only when the voltage of the carrier is within the modulation reference voltage range. Therefore, when the modulation reference voltage range is a value, the voltage of the carrier is definitely outside the modulation reference voltage range. In this case, the comparator continuously outputs the low level (drive signal).

The modulation method is merely an example, and the modulation method is not limited in this application.

### Carrier

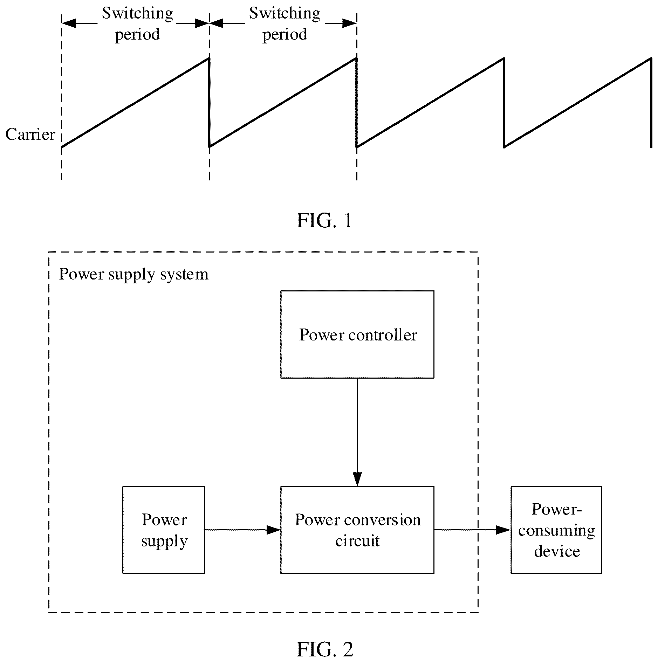

The carrier is a modulated waveform, and is usually a periodic waveform, such as a triangular wave. FIG. 1 shows a triangular wave.

### On/off cycle

A complete waveform of a carrier is an on/off cycle. For example, with reference to FIG. 1, the carrier is a triangular wave, and a complete triangular waveform is one on/off cycle.

The technical solutions provided in embodiments of this application may be applied to a power supply system, and the power supply system may be an energy storage cabinet, a charging pile, or the like. With reference to FIG. 2, the power supply system may include a power supply, a power controller, and a power conversion circuit.

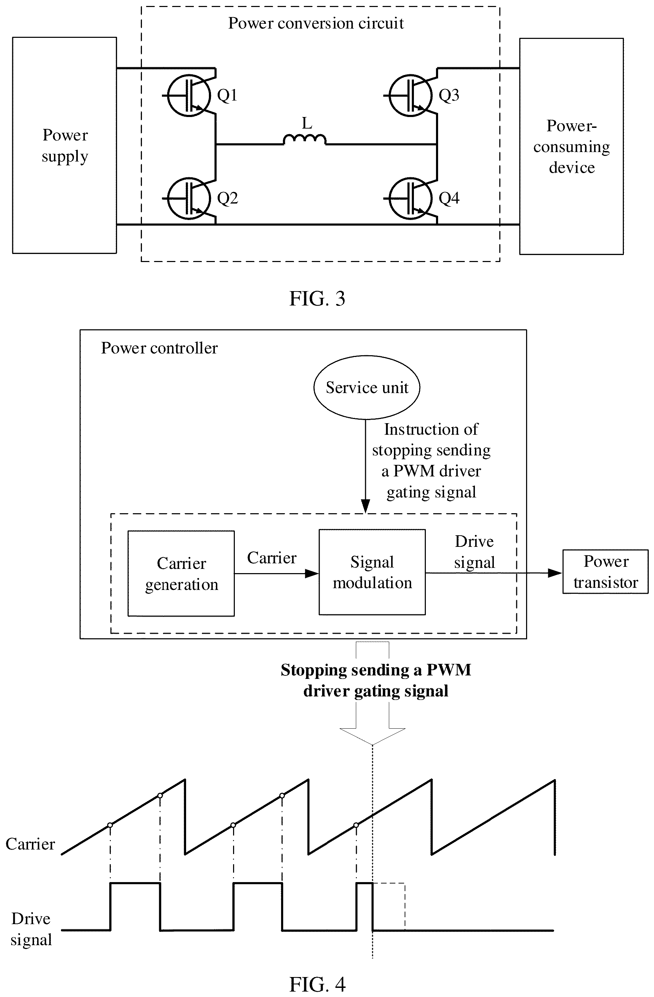

The power supply may be a battery, a power grid, or the like. The power conversion circuit may be a buck-boost (buck-boost) circuit, a resonant (inductor-inductor-capacitor, LLC) circuit, or the like. A topology of the power conversion circuit is not limited in this application. FIG. 3 shows a topology of the power conversion circuit, including power transistors Q1, Q2, Q3, and Q4, and an inductor L. The power controller and the power conversion circuit may be independently deployed, or may be integrated into one chip. When the power controller and the power conversion circuit are integrated, the chip into which the power controller and the power conversion circuit are integrated may be referred to as a power converter, a power supply module, or the like.

An input and an output of the power conversion circuit are respectively connected to the power supply and a power-consuming device. The power controller is configured to control on and off of the power transistor in the power conversion circuit, so that the power conversion circuit performs power conversion on an input power. The power controller has two types of control over the power transistor: control over sending a PWM driver gating signal and control over stopping sending a PWM driver gating signal. When performing control over sending a PWM driver gating signal, the power controller outputs, to the power transistor, a drive signal that can control the power transistor to be periodically turned on and off. When performing control over stopping sending a PWM driver gating signal, the power controller outputs, to the power transistor, a drive signal that can control the power transistor to keep turned-off.

In a related technology, with reference to FIG. 4, when receiving an instruction of stopping sending a PWM driver gating signal, the power controller immediately performs control over stopping sending a PWM driver gating signal. In this case, if the power transistor is in an on state when the instruction of stopping sending a PWM driver gating signal is received, and control over stopping sending a PWM driver gating signal is immediately performed in this case, a current peak or a voltage peak may occur in the power transistor, which affects performance of the power conversion circuit.

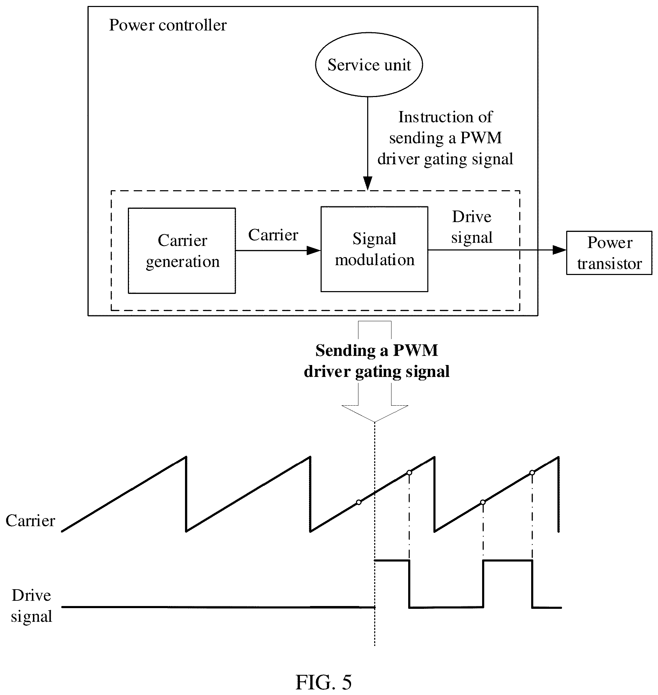

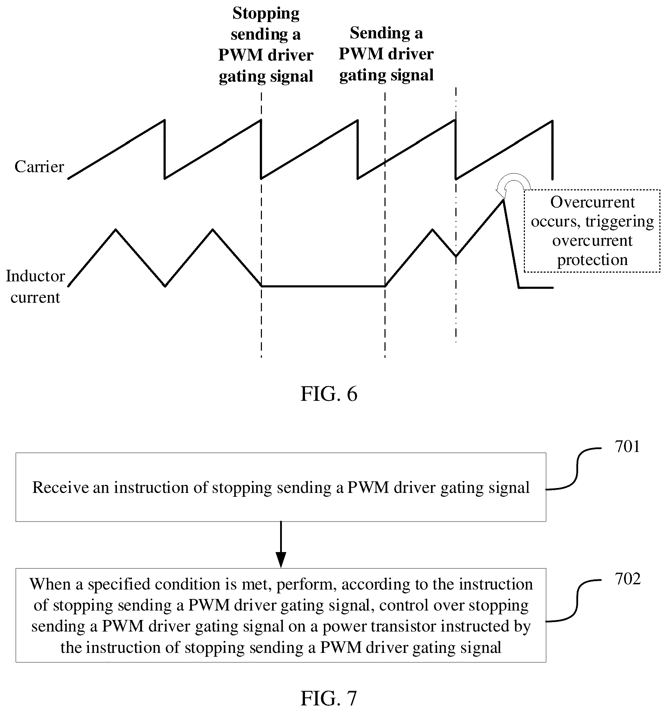

In a related technology, with reference to FIG. 5, when receiving an instruction of sending a PWM driver gating signal, the power controller immediately performs control over sending a PWM driver gating signal. In this case, if the instruction of sending a PWM driver gating signal is received in an on/off cycle, and control over sending a PWM driver gating signal is immediately performed in this case, an overcurrent phenomenon may occur in an inductor current. This may cause a safety problem to occur in the power conversion circuit. FIG. 6 shows that the overcurrent phenomenon occurs in the inductor current because the instruction of sending a PWM driver gating signal is received in the on/off cycle and control over sending a PWM driver gating signal is immediately performed.

In the technical solutions provided in embodiments of this application, after the instruction of stopping sending a PWM driver gating signal for the power transistor is received, and when the power transistor is turned off, control over stopping sending a PWM driver gating signal is performed on the power transistor. This can effectively avoid the current peak or the voltage peak that is generated because the power transistor is suddenly turned off when the power transistor is turned on. After the instruction of sending a PWM driver gating signal for the power transistor is received, control over sending a PWM driver gating signal is performed when a current on/off cycle ends (that is, a next on/off cycle starts). This can effectively avoid the overcurrent phenomenon caused by stopping sending a PWM driver gating signal performed in the on/off cycle of the power transistor.

The following describes the technical solutions provided in embodiments of this application with reference to the accompanying drawings.

An embodiment of this application provides a control method of the power conversion circuit. In the method, an operation of stopping sending a PWM driver gating signal may be performed on the power transistor when the power transistor is turned off. The method may be implemented by the power controller. With reference to FIG. 7, the method may include the following processing steps.

Step 701: Receive the instruction of stopping sending a PWM driver gating signal.

During implementation, after detecting a trigger event of stopping sending a PWM driver gating signal, a service unit in the power controller generates and sends the instruction of stopping sending a PWM driver gating signal. The trigger event of stopping sending a PWM driver gating signal may be an event such as an overcurrent event occurring in the power conversion circuit, an over-temperature event occurring in the power conversion circuit, an overvoltage event occurring in the power conversion circuit, an event that the power conversion circuit generates a ripple, and an event that a control over stopping sending a PWM driver gating signal message delivered by a user is received. The following describes the instruction of stopping sending a PWM driver gating signal.

The instruction of stopping sending a PWM driver gating signal may instruct to perform control over stopping sending a PWM driver gating signal on any power transistor in the power conversion circuit. The instruction of stopping sending a PWM driver gating signal may further instruct to perform control over stopping sending a PWM driver gating signal on any power transistor group in the power conversion circuit. The power transistor group may be divided by related personnel based on an actual requirement and the topology of the power conversion circuit. One power transistor group includes a plurality of power transistors. The instruction of stopping sending a PWM driver gating signal may further instruct to perform control over stopping sending a PWM driver gating signal on all power transistors in the power conversion circuit.

For example, if the instruction of stopping sending a PWM driver gating signal instructs to perform control over stopping sending a PWM driver gating signal on a first power transistor in the power conversion circuit, the instruction of stopping sending a PWM driver gating signal may carry an identifier of the first power transistor. The first power transistor is any power transistor in the power conversion circuit. If the instruction of stopping sending a PWM driver gating signal instructs to perform control over stopping sending a PWM driver gating signal on a first power transistor group in the power conversion circuit, the instruction of stopping sending a PWM driver gating signal may carry an identifier of the first power transistor group. The first power transistor group includes a plurality of power transistors. If the instruction of stopping sending a PWM driver gating signal instructs to perform control over stopping sending a PWM driver gating signal on all power transistors in the power conversion circuit, the instruction of stopping sending a PWM driver gating signal may not need to carry an identifier related to the power transistor.

The case to which the instruction of stopping sending a PWM driver gating signal specifically belongs to may be configured by the related personnel based on the actual service requirement and the topology of the power conversion circuit. This is not limited in embodiments of this application.

Step 702: When a specified condition is met, perform, according to the instruction of stopping sending a PWM driver gating signal, control over stopping sending a PWM driver gating signal on a power transistor instructed by the instruction of stopping sending a PWM driver gating signal.

When the specified condition is met, the power transistor instructed by the instruction of stopping sending a PWM driver gating signal is in an off state.

During implementation, there may be a plurality of specified conditions. The following uses several of the specified conditions as examples for description.

### Specified condition 1:

When drive signals of power transistors instructed by the instruction of stopping sending a PWM driver gating signal are all turn-off signals, it is determined that the specified condition is met, and control over stopping sending a PWM driver gating signal is performed on the power transistors instructed by the instruction of stopping sending a PWM driver gating signal.

For example, if the instruction of stopping sending a PWM driver gating signal instructs to perform control over stopping sending a PWM driver gating signal on the first power transistor, when a drive signal of the first power transistor is the turn-off signal (for example, in a low level), it is determined that the specified condition is met, and control over stopping sending a PWM driver gating signal is performed on the first power transistor.

For another example, if the instruction of stopping sending a PWM driver gating signal instructs to perform control over stopping sending a PWM driver gating signal on the first power transistor group, when drive signals of the first power transistor group are all the turn-off signals (for example, in a low level), it is determined that the specified condition is met, and control over stopping sending a PWM driver gating signal is performed on the first power transistor group.

For still another example, if the instruction of stopping sending a PWM driver gating signal instructs to perform control over stopping sending a PWM driver gating signal on all the power transistors in the power conversion circuit, when drive signals of all the power transistors in the power conversion circuit are the turn-off signals (for example, in a low level), it is determined that the specified condition is met, and control over stopping sending a PWM driver gating signal is performed on all the power transistors in the power conversion circuit.

### Specified condition 2:

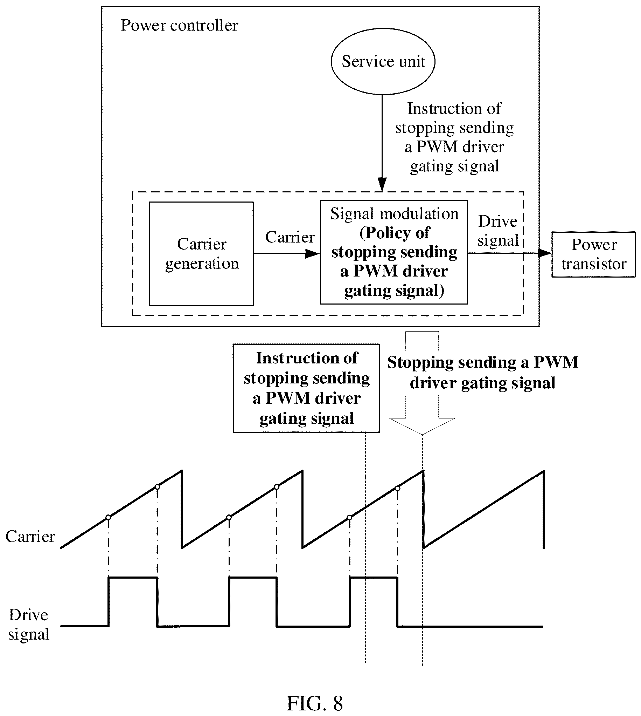

With reference to FIG. 8, when a first on/off cycle in which the power transistor instructed by the instruction of stopping sending a PWM driver gating signal is located ends, it is determined that the specified condition is met, and control over stopping sending a PWM driver gating signal is performed on the power transistor instructed by the instruction of stopping sending a PWM driver gating signal. On/off cycles of the power transistors instructed by the instruction of stopping sending a PWM driver gating signal are the same.

The following describes how to determine that the first on/off cycle ends.

The carrier shown in FIG. 1 is used as an example. When an on/off cycle starts, a count value of a counter is 0, and counting up starts at 0. When the on/off cycle ends, the count value of the counter is reset to 0, indicating that a previous on/off cycle ends and a next on/off cycle starts. Therefore, after the instruction of stopping sending a PWM driver gating signal is received, when it is determined that the count value of the counter changes to 0, it is determined that the first on/off cycle ends.

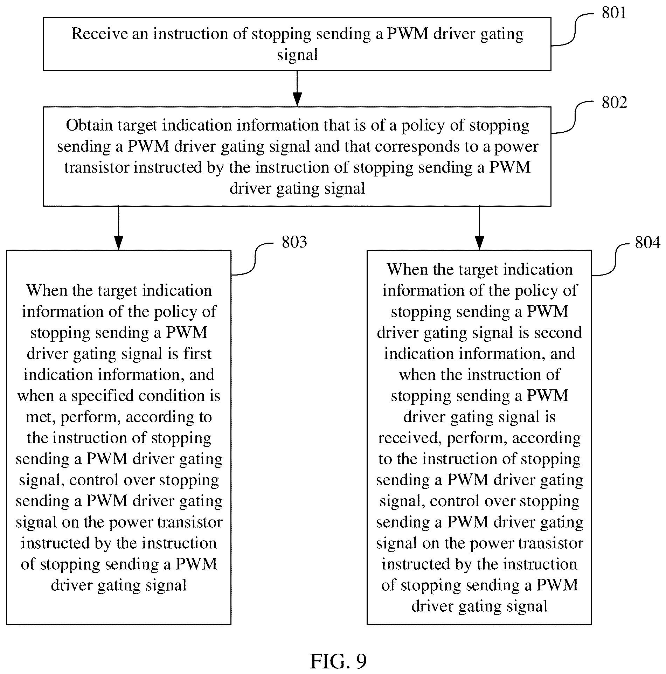

An embodiment of this application further provides a control method of the power conversion circuit. In the method, a user may configure a policy of stopping sending a PWM driver gating signal, and after the instruction of stopping sending a PWM driver gating signal is received, the policy that is of stopping sending a PWM driver gating signal and that is configured by the user is executed. With reference to FIG. 9, the method may include the following processing steps.

Step 801: Receive the instruction of stopping sending a PWM driver gating signal.

Specific implementation of step 801 is the same as the specific embodiment of step 701. Details are not described herein again.

Step 802: Obtain target indication information that is of a policy of stopping sending a PWM driver gating signal and that corresponds to a power transistor instructed by the instruction of stopping sending a PWM driver gating signal.

During implementation, indication information of a policy of stopping sending a PWM driver gating signal may be stored in a register of the power controller. Based on an actual service requirement and different topologies of the power conversion circuit, correspondences between power transistors and pieces of indication information of a policy of stopping sending a PWM driver gating signal may also be different. The following describes the correspondences in three cases.

### Case 1:

Each power transistor corresponds to one piece of indication information of a policy of stopping sending a PWM driver gating signal. Table 1 lists correspondences between identifiers of power transistors and pieces of indication information of policies of stopping sending a PWM driver gating signal.

**Table 1**

| Identifier of the power transistor | Indication information of the policy of stopping sending a PWM driver gating signal |
|---|---|
| Q1 | First indication information |
| Q2 | Second indication information |
| Q3 | Second indication information |
| Q4 | First indication information |
| ... | ... |

The case 1 corresponds to a case in which the instruction of stopping sending a PWM driver gating signal instructs to perform control over stopping sending a PWM driver gating signal on a first power transistor. Correspondingly, after the instruction of stopping sending a PWM driver gating signal is received, an identifier that is of the first power transistor and that is carried in the instruction of stopping sending a PWM driver gating signal is obtained. Then, corresponding target indication information of a policy of stopping sending a PWM driver gating signal is queried in Table 1 based on the identifier of the first power transistor.

### Case 2:

Each power transistor group corresponds to one piece of indication information of a policy of stopping sending a PWM driver gating signal. Table 2 lists correspondences between identifiers of power transistor groups and pieces of indication information of policies of stopping sending a PWM driver gating signal.

**Table 2**

| Identifier of the power transistor group | Indication information of the policy of stopping sending a PWM driver gating signal |
|---|---|
| G1 | Second indication information |
| G2 | First indication information |
| G3 | Second indication information |
| G4 | First indication information |
| ... | ... |

The case 2 corresponds to a case in which the instruction of stopping sending a PWM driver gating signal instructs to perform control over stopping sending a PWM driver gating signal on a first power transistor group. Correspondingly, after the instruction of stopping sending a PWM driver gating signal is received, an identifier that is of the first power transistor group and that is carried in the instruction of stopping sending a PWM driver gating signal is obtained. Then, corresponding target indication information of a policy of stopping sending a PWM driver gating signal is queried in Table 2 based on the identifier of the first power transistor group.

### Case 3:

All power transistors in the power protection circuit correspond to one piece of indication information of a policy of stopping sending a PWM driver gating signal.

The case 3 corresponds to a case in which the instruction of stopping sending a PWM driver gating signal instructs to perform control over stopping sending a PWM driver gating signal on all the power transistors in the power conversion circuit. Correspondingly, after the instruction of stopping sending a PWM driver gating signal is received, the target indication information of the policy of stopping sending a PWM driver gating signal is read from the register.

Step 803: When the target indication information of the policy of stopping sending a PWM driver gating signal is the first indication information, and when a specified condition is met, perform, according to the instruction of stopping sending a PWM driver gating signal, control over stopping sending a PWM driver gating signal on the power transistor instructed by the instruction of stopping sending a PWM driver gating signal.

During implementation, the indication information of the policy of stopping sending a PWM driver gating signal may be the first indication information or the second indication information. The first indication information is different from the second indication information. For example, the first indication information is 1, and the second indication information is 0. After the target indication information of the policy of stopping sending a PWM driver gating signal is obtained, and when the target indication information of the policy of stopping sending a PWM driver gating signal is the first indication information, processing in step 702 is performed.

Step 804: When the target indication information of the policy of stopping sending a PWM driver gating signal is the second indication information, and when the instruction of stopping sending a PWM driver gating signal is received, perform, according to the instruction of stopping sending a PWM driver gating signal, control over stopping sending a PWM driver gating signal on the power transistor instructed by the instruction of stopping sending a PWM driver gating signal.

During implementation, after the target indication information of the policy of stopping sending a PWM driver gating signal is obtained, and when the target indication information of the policy of stopping sending a PWM driver gating signal is the second indication information, control over stopping sending a PWM driver gating signal is immediately performed on the power transistor instructed by the instruction of stopping sending a PWM driver gating signal.

In a possible implementation, the policy of stopping sending a PWM driver gating signal may be configured by the user. Correspondingly, configuration processing may be as follows.

S80: Receive a configuration message of the policy of stopping sending a PWM driver gating signal. The configuration message of the policy of stopping sending a PWM driver gating signal carries the indication information of the policy of stopping sending a PWM driver gating signal.

During implementation, the user may send the configuration message of the policy of stopping sending a PWM driver gating signal to the power controller in a wired communication or wireless communication manner, through direct transmission by using a storage medium, or the like. The configuration message of the policy of stopping sending a PWM driver gating signal carries the indication information of the policy of stopping sending a PWM driver gating signal.

In addition, the configuration message of the policy of stopping sending a PWM driver gating signal may further carry control object indication information. The control object indication information indicates a power transistor or a power transistor group that corresponds to the indication information of the policy of stopping sending a PWM driver gating signal.

For example, if the policy of stopping sending a PWM driver gating signal is configured for the first power transistor, the configuration message of the policy of stopping sending a PWM driver gating signal may carry the identifier (control object indication information) of the first power transistor and corresponding indication information of a policy of stopping sending a PWM driver gating signal.

For example, if the policy of stopping sending a PWM driver gating signal is configured for the first power transistor group, the configuration message of the policy of stopping sending a PWM driver gating signal may carry the identifier (control object indication information) of the first power transistor group and corresponding indication information of a policy of stopping sending a PWM driver gating signal.

S81: Store the indication information of the policy of stopping sending a PWM driver gating signal.

During implementation, after receiving the configuration message of the policy of stopping sending a PWM driver gating signal, the power controller may obtain and store the indication information that is of the policy of stopping sending a PWM driver gating signal and that is carried in the configuration message of the policy of stopping sending a PWM driver gating signal.

When the indication information of the policy of stopping sending a PWM driver gating signal further carries the control object indication information, the indication information of the policy of stopping sending a PWM driver gating signal and the control object indication information may be correspondingly stored. When the control object indication information is the identifier of the power transistor, the indication information of the policy of stopping sending a PWM driver gating signal and the control object indication information that are correspondingly stored may be that in Table 1. When the control object indication information is the identifier of the power transistor group, the indication information of the policy of stopping sending a PWM driver gating signal and the control object indication information that are correspondingly stored may be that in Table 2.

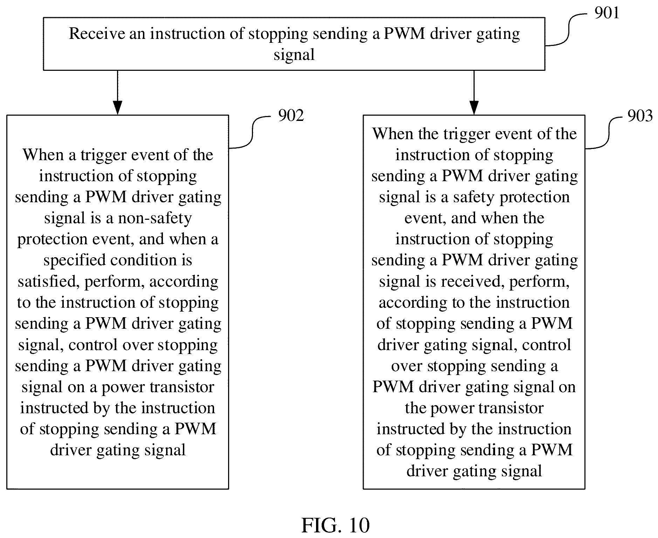

An embodiment of this application further provides a control method of the power conversion circuit. In the method, a policy of stopping sending a PWM driver gating signal may be determined based on a trigger event of the instruction of stopping sending a PWM driver gating signal. With reference to FIG. 10, the method may include the following processing steps.

Step 901: Receive the instruction of stopping sending a PWM driver gating signal.

Specific implementation of step 901 is the same as the specific embodiment of step 701. Details are not described herein again.

Step 902: When the trigger event of the instruction of stopping sending a PWM driver gating signal is a non-safety protection event, and when a specified condition is satisfied, perform, according to the instruction of stopping sending a PWM driver gating signal, control over stopping sending a PWM driver gating signal on a power transistor instructed by the instruction of stopping sending a PWM driver gating signal.

The non-safety protection event is an event that cannot cause the power conversion circuit to generate a safety accident.

During implementation, the power controller determines whether the trigger event that is of the instruction of stopping sending a PWM driver gating signal and that is detected by a service unit is a non-safety protection event or a safety protection event. The non-safety protection event is, for example, that the power conversion circuit generates a ripple. The safety protection event is, for example, an overcurrent, overvoltage, or over-temperature event occurs in the power conversion circuit.

When it is determined that the trigger event of the instruction of stopping sending a PWM driver gating signal is the non-safety protection event, processing in step 702 may be performed.

Step 903: When the trigger event of the instruction of stopping sending a PWM driver gating signal is the safety protection event, and when the instruction of stopping sending a PWM driver gating signal is received, perform, according to the instruction of stopping sending a PWM driver gating signal, control over stopping sending a PWM driver gating signal on the power transistor instructed by the instruction of stopping sending a PWM driver gating signal.

The safety protection event is an event that can cause the power conversion circuit to generate the safety accident.

During implementation, when determining that the trigger event of the instruction of stopping sending a PWM driver gating signal is the safety protection event, the power controller may immediately perform control over stopping sending a PWM driver gating signal on the power transistor instructed by the instruction of stopping sending a PWM driver gating signal.

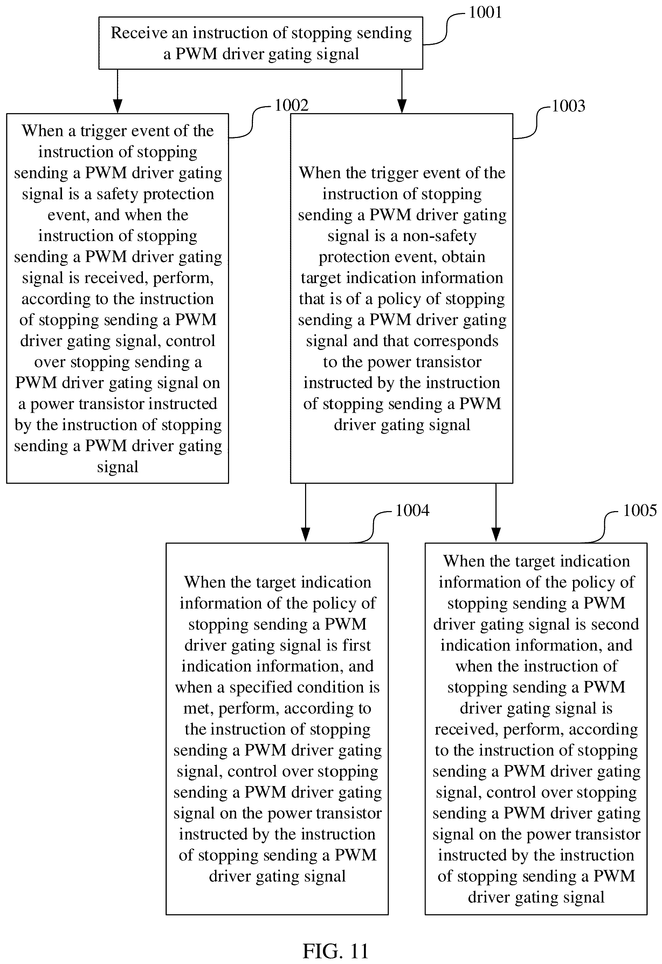

An embodiment of this application further provides a control method of the power conversion circuit. In the method, a policy of stopping sending a PWM driver gating signal may be jointly determined based on user's configuration and a trigger event of the instruction of stopping sending a PWM driver gating signal. With reference to FIG. 11, the method may include the following processing steps.

Step 1001: Receive the instruction of stopping sending a PWM driver gating signal.

Specific implementation of step 1001 is the same as the specific embodiment of step 701. Details are not described herein again.

Step 1002: When the trigger event of the instruction of stopping sending a PWM driver gating signal is a safety protection event, and when the instruction of stopping sending a PWM driver gating signal is received, perform, according to the instruction of stopping sending a PWM driver gating signal, control over stopping sending a PWM driver gating signal on a power transistor instructed by the instruction of stopping sending a PWM driver gating signal.

During implementation, when determining that the trigger event of the instruction of stopping sending a PWM driver gating signal is a non-safety protection event, the power controller may immediately perform control over stopping sending a PWM driver gating signal on the power transistor instructed by the instruction of stopping sending a PWM driver gating signal.

Step 1003: When the trigger event of the instruction of stopping sending a PWM driver gating signal is the non-safety protection event, obtain target indication information that is of a policy of stopping sending a PWM driver gating signal and that corresponds to the power transistor instructed by the instruction of stopping sending a PWM driver gating signal.

During implementation, when determining that the trigger event of the instruction of stopping sending a PWM driver gating signal is the non-safety protection event, the power controller may perform processing in step 802, to obtain the target indication information that is of the policy of stopping sending a PWM driver gating signal and that corresponds to the power transistor instructed by the instruction of stopping sending a PWM driver gating signal.

Step 1004: When the target indication information of the policy of stopping sending a PWM driver gating signal is first indication information, and when a specified condition is met, perform, according to the instruction of stopping sending a PWM driver gating signal, control over stopping sending a PWM driver gating signal on the power transistor instructed by the instruction of stopping sending a PWM driver gating signal.

During implementation, specific implementation of step 1004 is the same as the specific embodiment of step 803. Details are not described herein again.

Step 1005: When the target indication information of the policy of stopping sending a PWM driver gating signal is second indication information, and when the instruction of stopping sending a PWM driver gating signal is received, perform, according to the instruction of stopping sending a PWM driver gating signal, control over stopping sending a PWM driver gating signal on the power transistor instructed by the instruction of stopping sending a PWM driver gating signal.

During implementation, specific implementation of step 1005 is the same as the specific embodiment of step 804. Details are not described herein again.

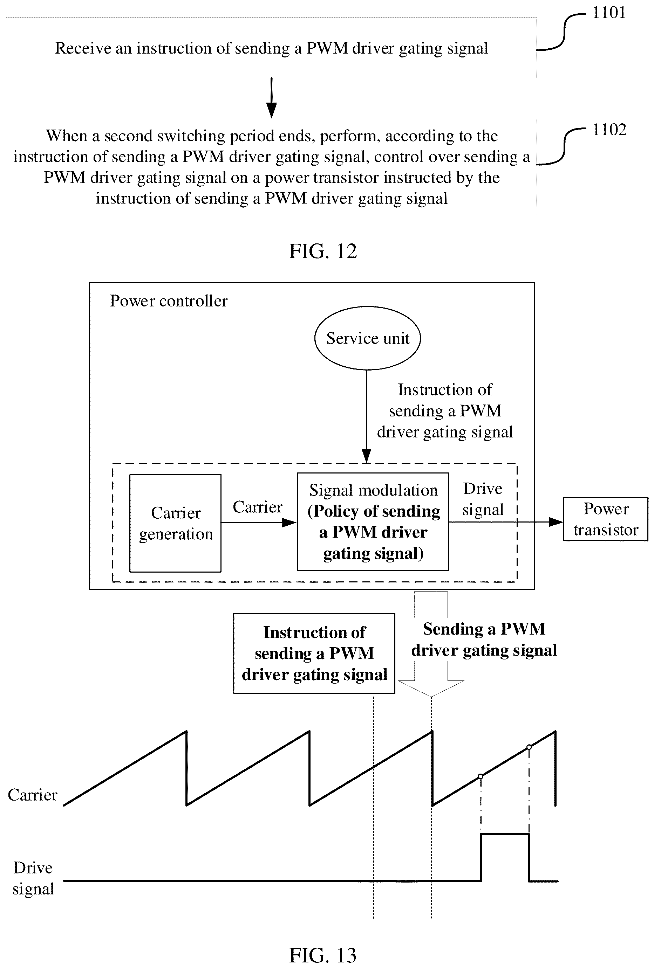

An embodiment of this application further provides a control method of the power conversion circuit. In the method, an operation of sending a PWM driver gating signal may be performed on the power transistor when a current on/off cycle in which the power transistor is located ends. With reference to FIG. 12, the method may include the following processing steps.

Step 1101: Receive the instruction of sending a PWM driver gating signal.

During implementation, after detecting a trigger event of sending a PWM driver gating signal, a service unit in the power controller generates and sends the instruction of sending a PWM driver gating signal. The trigger event of sending a PWM driver gating signal may be an event such as an event that a control over sending a PWM driver gating signal message delivered by a user is received. The following describes the instruction of sending a PWM driver gating signal.

The instruction of sending a PWM driver gating signal may instruct to perform control over sending a PWM driver gating signal on any power transistor in the power conversion circuit. The instruction of sending a PWM driver gating signal may further instruct to perform control over sending a PWM driver gating signal on any power transistor group in the power conversion circuit. The power transistor group may be divided by related personnel based on an actual requirement and the topology of the power conversion circuit. One power transistor group includes a plurality of power transistors. The instruction of sending a PWM driver gating signal may further instruct to perform control over sending a PWM driver gating signal on all power transistors in the power conversion circuit.

For example, if the instruction of sending a PWM driver gating signal instructs to perform control over sending a PWM driver gating signal on a first power transistor in the power conversion circuit, the instruction of sending a PWM driver gating signal may carry an identifier of the first power transistor. The first power transistor is any power transistor in the power conversion circuit. If the instruction of sending a PWM driver gating signal instructs to perform control over sending a PWM driver gating signal on a first power transistor group in the power conversion circuit, the instruction of sending a PWM driver gating signal may carry an identifier of the first power transistor group. The first power transistor group includes a plurality of power transistors. If the instruction of sending a PWM driver gating signal instructs to perform control over sending a PWM driver gating signal on all power transistors in the power conversion circuit, the instruction of sending a PWM driver gating signal may not need to carry an identifier related to the power transistor.

The case to which the instruction of sending a PWM driver gating signal specifically belongs to may be configured by the related personnel based on the actual service requirement and the topology of the power conversion circuit. This is not limited in embodiments of this application.

Step 1102: When a second on/off cycle ends, perform, according to the instruction of sending a PWM driver gating signal, control over sending a PWM driver gating signal on a power transistor instructed by the instruction of sending a PWM driver gating signal.

The second on/off cycle is an on/off cycle in which the power transistor instructed by the instruction of sending a PWM driver gating signal is located when the instruction of sending a PWM driver gating signal is received.

During implementation, with reference to FIG. 13, when it is determined that the second on/off cycle ends, control over sending a PWM driver gating signal is performed on the power transistor instructed by the instruction of sending a PWM driver gating signal. A method for determining that the second on/off cycle ends is the same as the method for determining that the first on/off cycle ends in step 702. Details are not described herein again.

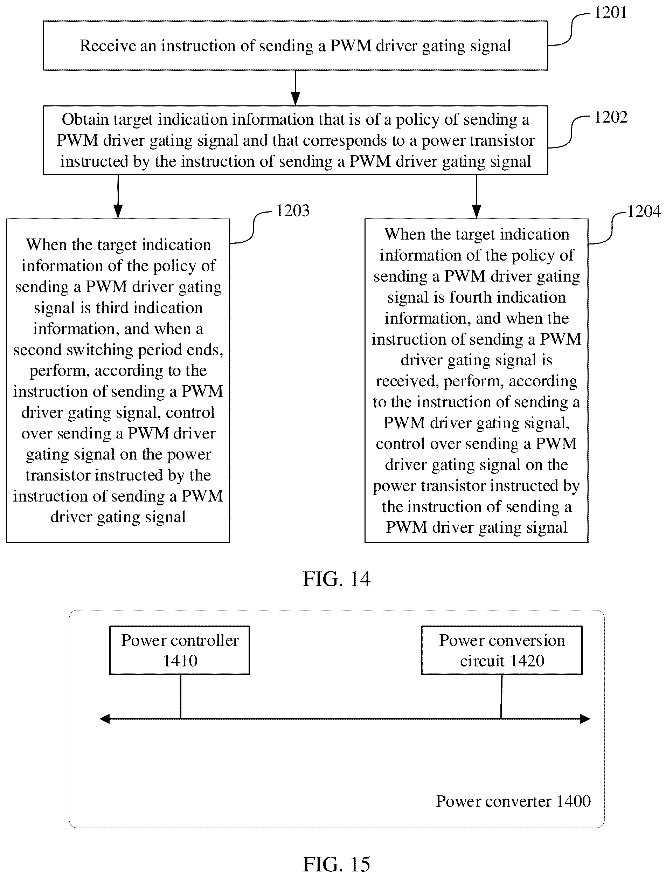

An embodiment of this application further provides a control method of the power conversion circuit. In the method, a user may configure a policy of sending a PWM driver gating signal. With reference to FIG. 14, the method may include the following processing steps.

Step 1201: Receive the instruction of sending a PWM driver gating signal.

Specific implementation of step 1201 is the same as the specific embodiment of step 1001. Details are not described herein again.

Step 1202: Obtain target indication information that is of a policy of sending a PWM driver gating signal and that corresponds to a power transistor instructed by the instruction of sending a PWM driver gating signal.

During implementation, indication information of a policy of sending a PWM driver gating signal may be stored in a register of the power controller. Based on an actual service requirement and different topologies of the power conversion circuit, correspondences between power transistors and pieces of indication information of a policy of sending a PWM driver gating signal may also be different. The following describes the correspondences in three cases.

### Case 1:

Each power transistor corresponds to one piece of indication information of a policy of sending a PWM driver gating signal. Table 3 lists correspondences between identifiers of power transistors and pieces of indication information of a policy of sending a PWM driver gating signal.

**Table 3**

| Identifier of the power transistor | Indication information of the policy of sending a PWM driver gating signal |
|---|---|
| Q1 | Third indication information |
| Q2 | Third indication information |
| Q3 | Fourth indication information |
| Q4 | Fourth indication information |
| ... | ... |

The case 1 corresponds to a case in which the instruction of sending a PWM driver gating signal instructs to perform control over sending a PWM driver gating signal on a first power transistor. Correspondingly, after the instruction of sending a PWM driver gating signal is received, an identifier that is of the first power transistor and that is carried in the instruction of sending a PWM driver gating signal is obtained. Then, corresponding target indication information of a policy of sending a PWM driver gating signal is queried in Table 3 based on the identifier of the first power transistor.

### Case 2:

Each power transistor group corresponds to one piece of indication information of a policy of sending a PWM driver gating signal. Table 4 lists correspondences between identifiers of power transistor groups and pieces of indication information of a policy of sending a PWM driver gating signal.

**Table 4**

| Identifier of the power transistor group | Indication information of the policy of sending a PWM driver gating signal |
|---|---|
| G1 | Third indication information |
| G2 | Fourth indication information |
| G3 | Fourth indication information |
| G4 | Third indication information |
| ... | ... |

The case 2 corresponds to a case in which the instruction of sending a PWM driver gating signal instructs to perform control over sending a PWM driver gating signal on a first power transistor group. Correspondingly, after the instruction of sending a PWM driver gating signal is received, an identifier that is of the first power transistor group and that is carried in the instruction of sending a PWM driver gating signal is obtained. Then, corresponding target indication information of a policy of sending a PWM driver gating signal is queried in Table 4based on the identifier of the first power transistor group.

### Case 3:

All power transistors in the power protection circuit correspond to one piece of indication information of a policy of sending a PWM driver gating signal.

The case 3 corresponds to a case in which the instruction of sending a PWM driver gating signal instructs to perform control over sending a PWM driver gating signal on all the power transistors in the power conversion circuit. Correspondingly, after the instruction of sending a PWM driver gating signal is received, the target indication information of the policy of sending a PWM driver gating signal is read from the register.

Step 1203: When the target indication information of the policy of sending a PWM driver gating signal is the third indication information, and when a second on/off cycle ends, perform, according to the instruction of sending a PWM driver gating signal, control over sending a PWM driver gating signal on the power transistor instructed by the instruction of sending a PWM driver gating signal.

During implementation, the indication information of the policy of sending a PWM driver gating signal may be the third indication information or the fourth indication information. The third indication information is different from the fourth indication information. For example, the third indication information is 1, and the fourth indication information is 0. After the target indication information of the policy of sending a PWM driver gating signal is obtained, and when the target indication information of the policy of sending a PWM driver gating signal is the third indication information, processing in step 1102 is performed.

Step 1204: When the target indication information of the policy of sending a PWM driver gating signal is the fourth indication information, and when the instruction of sending a PWM driver gating signal is received, perform, according to the instruction of sending a PWM driver gating signal, control over sending a PWM driver gating signal on the power transistor instructed by the instruction of sending a PWM driver gating signal.

During implementation, after the target indication information of the policy of sending a PWM driver gating signal is obtained, and when the target indication information of the policy of sending a PWM driver gating signal is the fourth indication information, control over sending a PWM driver gating signal is immediately performed on the power transistor instructed by the instruction of sending a PWM driver gating signal.

In a possible implementation, the policy of sending a PWM driver gating signal may be configured by the user. Correspondingly, configuration processing may be as follows.

S120: Receive a configuration message of a policy of sending a PWM driver gating signal. The configuration message of the policy of sending a PWM driver gating signal carries the indication information of the policy of sending a PWM driver gating signal.

During implementation, the user may send the configuration message of the policy of sending a PWM driver gating signal to the power controller in a wired communication or wireless communication manner, through direct transmission by using a storage medium, or the like. The configuration message of the policy of sending a PWM driver gating signal carries the indication information of the policy of sending a PWM driver gating signal.

In addition, the configuration message of the policy of sending a PWM driver gating signal may further carry control object indication information. The control object indication information indicates a power transistor or a power transistor group that corresponds to the indication information of the policy of sending a PWM driver gating signal.

For example, if the policy of sending a PWM driver gating signal is configured for the first power transistor, the configuration message of the policy of sending a PWM driver gating signal may carry the identifier (control object indication information) of the first power transistor and corresponding indication information of a policy of sending a PWM driver gating signal.

For example, if the policy of sending a PWM driver gating signal is configured for the first power transistor group, the configuration message of the policy of sending a PWM driver gating signal may carry the identifier (control object indication information) of the first power transistor group and corresponding indication information of a policy of sending a PWM driver gating signal.

S121: Store the indication information of the policy of sending a PWM driver gating signal.

During implementation, after the configuration message of the policy of sending a PWM driver gating signal is received, the indication information that is of the policy of sending a PWM driver gating signal and that is carried in the configuration message of the policy of sending a PWM driver gating signal may be obtained and stored.

When the indication information of the policy of sending a PWM driver gating signal further carries the control object indication information, the indication information of the policy of sending a PWM driver gating signal and the control object indication information may be correspondingly stored. When the control object indication information is the identifier of the power transistor, the indication information of the policy of sending a PWM driver gating signal and the control object indication information that are correspondingly stored may be that in Table 3. When the control object indication information is the identifier of the power transistor group, the indication information of the policy of sending a PWM driver gating signal and the control object indication information that are correspondingly stored may be that in Table 4.

In a possible implementation, the policy of sending a PWM driver gating signal and the policy of stopping sending a PWM driver gating signal may reuse a same configuration message, and the indication information of the policy of stopping sending a PWM driver gating signal and the indication information of the policy of sending a PWM driver gating signal may reuse same indication information for representation. The reused indication information may be referred to as mode indication information. There may be four types of mode indication information: first mode indication information, second mode indication information, third mode indication information, and fourth mode indication information. For example, the first mode indication information may be 00, the second mode indication information may be 01, the third mode indication information may be 10, and the fourth mode indication information may be 11.

Control mode configuration processing may be as follows.

S130: Receive a control mode configuration message. The control mode configuration message carries the mode indication information.

During implementation, a user may send the control mode configuration message to the power controller in a wired communication or wireless communication manner, through direct transmission by using a storage medium, or the like. The control mode configuration message carries the mode indication information.

In addition, the control mode configuration message may further carry control object indication information. The control object indication information indicates a power transistor or a power transistor group that corresponds to the mode indication information.

For example, if a control mode is configured for the first power transistor, the control mode configuration message may carry the identifier (control object indication information) of the first power transistor and corresponding mode indication information.

For example, if a control mode is configured for the first power transistor group, the control mode configuration message may carry the identifier (control object indication information) of the first power transistor group and corresponding mode indication information.

S131: Store the mode indication information.

During implementation, after receiving the control mode configuration message, the power controller may obtain and store the mode indication information carried in the control mode configuration message.

When the control mode indication information further carries the control object indication information, the mode indication information and the control object indication information may be correspondingly stored. When the control object indication information is the identifier of the power transistor, correspondences listed in Table 5 may be stored. When the control object indication information is the identifier of the power transistor group, correspondences listed in Table 6 may be stored.

**Table 5**

| Identifier of the power transistor | Mode indication information |
|---|---|
| Q1 | Fourth mode indication information |
| Q2 | Second mode indication information |
| Q3 | First mode indication information |
| Q4 | Third mode indication information |
| ... | ... |

**Table 6**

| Identifier of the power transistor group | Mode indication information |
|---|---|
| G1 | Second mode indication information |
| G2 | Third mode indication information |
| G3 | First mode indication information |
| G4 | Fourth mode indication information |
| ... | ... |

When the control mode configuration is used, the first indication information may be the third mode indication information or the fourth mode indication information, the second indication information may be first mode indication information or the second mode indication information, the third indication information may be the third mode indication information or the fourth mode indication information, and the fourth indication information may be the first mode indication information or the second mode indication information.

An embodiment of this application further provides a power converter. As shown in FIG. 15, the power converter 1400 includes a power controller 1410 and a power conversion circuit 1420. The power controller 1410 and the power conversion circuit 1420 may be independently deployed, or may be integrated into one chip.

The power controller 1410 may be a general-purpose central processing unit (Central Processing Unit, CPU), a digital signal processor (digital signal processor, DSP), a network processor (network processor, NP), a GPU, a neural-network processing unit (neural-network processing units, NPU), a data processing unit (Data Processing Unit, DPU), a microprocessor, one or more integrated circuits or application-specific integrated circuits (application-specific integrated circuit, ASIC) configured to implement solutions of this application, a programmable logic device (programmable logic device, PLD), another general-purpose processor or another programmable logic device, a discrete gate, a transistor logic device, a discrete hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The power controller 1410 is configured to perform the control methods that are of the power conversion circuit and that are shown in FIG. 7, FIG. 9, FIG. 10, FIG. 11, FIG. 12, and FIG. 14.

The power conversion circuit 1420 may be a boost-buck (buck-boost) circuit, a resonant (inductor-inductor-capacitor, LLC) circuit, or the like. A topology of the power conversion circuit 1420 is not limited in this application.

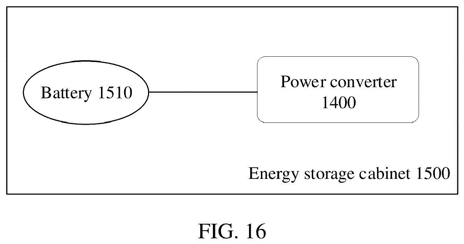

An embodiment of this application further provides an energy storage cabinet. As shown in FIG. 16, the energy storage cabinet includes a battery 1510 and the power converter 1400 shown in FIG. 15. The power converter 1400 is configured to perform power conversion on the battery 1510.

An embodiment of this application further provides a control apparatus of the power conversion circuit. The apparatus includes at least one module, and the at least one module is configured to implement the control methods that are of the power conversion circuit and that are shown in FIG. 7, FIG. 9, FIG. 10, FIG. 11, FIG. 12, and FIG. 14.

In an example embodiment, a computer program (product) is provided. The computer program (product) includes computer program code. When the computer program code is run by a power converter, the power converter is enabled to perform the control methods that are of the power conversion circuit shown and that are shown in FIG. 7, FIG. 9, FIG. 10, FIG. 11, FIG. 12, and FIG. 14.

In an example embodiment, a computer-readable storage medium is provided. The computer-readable storage medium stores a program or instructions. When the program or instructions are run by a power converter, the power converter performs the control methods that are of the power conversion circuit and that are shown in FIG. 7, FIG. 9, FIG. 10, FIG. 11, FIG. 12, and FIG. 14.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a computer device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive), or the like.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should also be understood that although the terms such as "first" and "second" are used in the following descriptions to describe various elements, these elements should not be limited by the terms. These terms are merely used to distinguish one element from another element.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The term "at least one" in this application means one or more, and the term "a plurality of" in this application means two or more. For example, a plurality of second devices means two or more second devices. The terms "system" and "network" may be often used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between associated objects.

It should be further understood that the terms "if" and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application should fall within the protection scope of this application.

## Claims

1. A power converter, wherein the power converter comprises a power controller and a power conversion circuit, and the power conversion circuit comprises a first power transistor; and
the power controller is configured to: when the first power transistor is in an on state, receive an instruction of stopping sending a PWM driver gating signal, wherein the instruction of stopping sending a PWM driver gating signal instructs to perform control over stopping sending a PWM driver gating signal on the first power transistor; and when a specified condition is met, perform, according to the instruction of stopping sending a PWM driver gating signal, control over stopping sending a PWM driver gating signal on the first power transistor, wherein the specified condition is that a drive signal of the first power transistor is a turn-off signal.

2. The power converter according to claim 1, wherein the power controller is further configured to:
obtain indication information of a policy of stopping sending a PWM driver gating signal; and
the power supply controller is specifically configured to:when the indication information of the policy of stopping sending a PWM driver gating signal is first indication information, and when the specified condition is met, perform, according to the instruction of stopping sending a PWM driver gating signal, control over stopping sending a PWM driver gating signal on the first power transistor.

3. The power converter according to claim 2, wherein the power controller is further configured to:
when the indication information of the policy of stopping sending a PWM driver gating signal is second indication information, and when the instruction of stopping sending a PWM driver gating signal is received, perform, according to the instruction of stopping sending a PWM driver gating signal, control over stopping sending a PWM driver gating signal on the first power transistor, wherein the first indication information is different from the second indication information.

4. The power converter according to claim 2 or 3, wherein the power controller is further configured to:
obtain the indication information of the policy of stopping sending a PWM driver gating signal; and
store the indication information of the policy of stopping sending a PWM driver gating signal.

5. The power converter according to claim 4, wherein the power controller is further configured to:
obtain control object indication information, wherein the control object indication information indicates a power transistor group that corresponds to the indication information of the policy of stopping sending a PWM driver gating signal, and the power transistor group comprises the first power transistor.

6. The power converter according to claim 1, wherein the power controller is further configured to:
when a trigger event of the instruction of stopping sending a PWM driver gating signal is a non-safety protection event, and when the specified condition is met, perform, according to the instruction of stopping sending a PWM driver gating signal, control over stopping sending a PWM driver gating signal on the first power transistor, wherein the non-safety protection event is an event that is unable to cause the power conversion circuit to generate a safety accident.

7. The power converter according to claim 6, wherein the power controller is further configured to:
when the trigger event of the instruction of stopping sending a PWM driver gating signal is a safety protection event, and when the instruction of stopping sending a PWM driver gating signal is received, perform, according to the instruction of stopping sending a PWM driver gating signal, control over stopping sending a PWM driver gating signal on the first power transistor, wherein the safety protection event is an event that is able to cause the power conversion circuit to generate the safety accident.

8. The power converter according to any one of claims 1 to 7, wherein the power controller is further configured to:
after a first on/off cycle ends, and when the specified condition is met, perform, according to the instruction of stopping sending a PWM driver gating signal, control over stopping sending a PWM driver gating signal on the first power transistor, wherein the first on/off cycle is an on/off cycle in which the first power transistor is located when the instruction of stopping sending a PWM driver gating signal is received.

9. The power converter according to any one of claims 1 to 8, wherein the power controller is further configured to:
receive an instruction of sending a PWM driver gating signal in a second on/off cycle in which the first power transistor is located, wherein the instruction of sending a PWM driver gating signal instructs to perform control over sending a PWM driver gating signal on the first power transistor; and
after the second on/off cycle ends, perform, according to the instruction of sending a PWM driver gating signal, control over sending a PWM driver gating signal on the first power transistor.

10. A power converter, wherein the power converter comprises a power controller and a power conversion circuit, the power conversion circuit comprises a first power transistor, and the power control is configured to:
receive an instruction of sending a PWM driver gating signal in an on/off cycle in which the first power transistor is located, wherein the instruction of sending a PWM driver gating signal instructs to perform control over sending a PWM driver gating signal on the first power transistor; and
when the on/off cycle ends, perform, according to the instruction of sending a PWM driver gating signal, control over sending a PWM driver gating signal on the first power transistor.

11. The power converter according to claim 10, wherein the power control module is further configured to:
obtain indication information of a policy of sending a PWM driver gating signal; and
the power control module is further configured to:
when the indication information of the policy of sending a PWM driver gating signal is first indication information, and when the on/off cycle ends, perform, according to the instruction of sending a PWM driver gating signal, control over sending a PWM driver gating signal on the first power transistor.

12. The power converter according to claim 11, wherein the power control module is further configured to:
when the indication information of the policy of sending a PWM driver gating signal is second indication information, and when the instruction of sending a PWM driver gating signal is received, perform, according to the instruction of sending a PWM driver gating signal, control over sending a PWM driver gating signal on the first power transistor, wherein the first indication information is different from the second indication information.

13. The power converter according to claim 11 or 12, wherein the power control module is further configured to:
obtain the indication information of the policy of sending a PWM driver gating signal; and
store the indication information of the policy of sending a PWM driver gating signal.

14. The power converter according to any one of claims 10 to 13, wherein the power control module is further configured to:
when the first power transistor is in an on state, receive an instruction of stopping sending a PWM driver gating signal, wherein the instruction of stopping sending a PWM driver gating signal instructs to perform control over stopping sending a PWM driver gating signal on the first power transistor; and
when a specified condition is met, perform, according to the instruction of stopping sending a PWM driver gating signal, control over stopping sending a PWM driver gating signal on the first power transistor, wherein the specified condition is that a drive signal of the first power transistor is a turn-off signal.

15. An energy storage cabinet, wherein the energy storage cabinet comprises a battery and the power converter according to any one of claims 1 to 14, and the power converter is configured to perform power conversion on the battery.
